# EUROPEAN PATENT APPLICATION

(11) **EP 4 137 784 A1**
(43) Date of publication of application: **22.02.2023**
(21) Application number: 21191967.5
(22) Date of filing: 18.08.2021
(51) Int. Cl.: G01F 23/292, G01N 33/52, G01F 23/80

(54) **LABORATORY SYSTEM AND METHOD FOR DETERMINING A PIECE OF INFORMATION**

(71) Applicant: Roche Diagnostics GmbH, 68305 Mannheim (DE); F. Hoffmann-La Roche AG, 4070 Basel (CH)
(72) Inventor: Ashraf, Imran, 70806 Kornwestheim (DE)
(74) Representative: Patentanwälte Ruff, Wilhelm, Beier, Dauster & Partner mbB

(57) **Abstract**

The invention relates to a laboratory system and a method for determining an information about at least one material arranged in and/or at a laboratory sample container, wherein determining an indication for a time of flight is used.

## Description

### TECHNICAL FIELD AND PRIOR ART

The invention relates to a laboratory system and a method for determining an information.

### SUMMARY OF THE INVENTION

It is the objective of the invention to provide a laboratory system and a method for determining an information about at least one material arranged in and/or at a laboratory sample container.

This objective is solved by a laboratory system according to claim 1 and a method according to claim 2. Preferred embodiments are defined in the dependent claims.

The invention relates to a laboratory system for determining an information about at least one material arranged in and/or at a laboratory sample container. The laboratory system comprises an emitting device, wherein the emitting device is configured to emit at least one measurement beam towards the laboratory sample container, such that at least a part of the emitted measurement beam interacts with the material. Furthermore, the laboratory system comprises a detecting device, wherein the detecting device is configured to detect at least a part of the interacted measurement beam. Moreover, the laboratory system further comprises a determining device, wherein the determining device is configured to determine an indication for a time of flight of the detected measurement beam, and to determine the information based on the determined indication for the time of flight.

This, in particular the determining the indication for the time of flight, enables determining the information easily and/or reliably.

In particular the laboratory system, the emitting device, the detecting device and/or the determining device may be electric.

The emitting device may be denoted emitter or source.

The detecting device may be denoted detector.

The determining device may comprise or be a processor.

The determining, the emitting and/or the detecting may be automatic.

The information may comprise or have a content.

The phrase "a property of' may be used synonymously for the phrase "an information about".

The term "substance" may be used synonymously for the term "material".

The material may be arranged within or at an inside of the laboratory sample container. Additionally or alternatively, the material may be arranged at an outside of the laboratory sample container.

The material may be in form of a laboratory sample, in particular a laboratory liquid sample, arranged in or contained by the laboratory sample container. In particular the laboratory sample may be a blood sample or a urine sample. Additionally or alternatively, the material may be in form of a label arranged at or attached to an outside of the laboratory sample container. Further additionally or alternatively, the material and the laboratory sample container may be different from each other. In particular the material may be different from a material of the laboratory sample container.

The laboratory sample container may be made of glass or transparent plastic or any other, in particular somewhat, solid material. Additionally or alternatively, the laboratory sample container may be partially transparent/transmissive or semi-transparent/transmissive and/or partially reflecting or semi-reflecting for the measurement beam. Further additionally or alternatively, the laboratory sample container may be designed as a tube.

The term "adapted" may be used synonymously for the term "configured".

The term "portion" may be used synonymously for the term "part".

The entire emitted measurement beam may interact with the material.

The detecting device may be configured to detect the entire interacted measurement beam.

The term "measuring" or "calculating" may be used synonymously for the term "determining".

The indication for the time of flight may be the, in particular real and/or determined, time of flight or a corresponding, in particular physical, quantity. Additionally or alternatively, the indication for the time of flight may comprise or have a value.

The invention further relates to a method for determining an, in particular the, information about, in particular the, at least one material arranged in and/or at a, in particular the, laboratory sample container. In particular the method may be performed by the laboratory system according to the invention. It should be noted that all details and embodiments mentioned with regard to the method may be applied with regard to the laboratory system, and vice versa.

The method comprises the steps:
a) emitting, in particular the, at least one measurement beam towards the laboratory sample container, such that at least a, in particular the, part of the emitted measurement beam interacts with the material,
b) detecting at least a, in particular the, part of the interacted measurement beam,
c) determining an, in particular the, indication for a, in particular the, time of flight of the detected measurement beam, and
d) determining the information based on the determined indication for the time of flight.

By this method, the same advantages as discussed above with regard to the laboratory system may be achieved.

In particular step b) may be performed simultaneously with step a) and/or after step a).

Step c) may be performed simultaneously with step b) and/or after step b).

Step d) may be performed simultaneously with step c) and/or after step c).

According to an embodiment of the invention, step a) may comprise: emitting one measurement beam towards one place of the laboratory sample container, such that at least a part of or the entire emitted one measurement beam interacts with the material, and emitting another one measurement beam towards another one place of the laboratory sample container, such that at least a part or the entire emitted another one measurement beam interacts less or does not interact with the material. Step b) may comprise: detecting at least a part or the entire interacted measurement beam and detecting at least a part or the entire of the less or not interacted measurement beam. Step c) may comprise: determining one indication for one time of flight of the detected interacted measurement beam and determining another one indication for another one time of flight of the detected less or not interacted measurement beam. Step d) may comprise: determining the information based on comparing the determined one indication for the one time of flight and the determined another one indication for the another one time of flight with each other. This enables determining the information based on the determined one indication for the one time of flight as an actual indication and the determined another one indication for the another one time of flight as a reference indication. In particular the term "position" may be used synonymously for the term "place".

According to an embodiment of the invention, the one place and the another one place differ in a longitudinal direction and/or a circumferential direction along the laboratory sample container. In particular the term "vertical" may be used synonymously for the term "longitudinal". Additionally or alternatively, the term "horizontal" or "lateral" may be used synonymously for the term "circumferential". Further additionally or alternatively, the longitudinal direction and the circumferential direction may be non-parallel, in particular orthogonal, to each other.

According to an embodiment of the invention, step a) may comprise: emitting the one measurement beam and emitting the another one measurement beam by an, in particular the, emitting device, wherein the emitting device and the laboratory sample container are moved relatively to each other.

Additionally or alternatively, step b) may comprise: detecting at least the part of the interacted measurement beam and detecting at least the part of the less or not interacted measurement beam by a, in particular the, detecting device, wherein the detecting device and the laboratory sample container are moved relatively to each other.

Such an embodiment/s allow/s using one and the same emitting device and/or one and the same detecting device in order to perform the method with at least two beams and/or two places.

In particular this, in particular the emitting and/or the detecting as well as the moving, may be denoted scanning. Additionally or alternatively, the laboratory sample container may be moved vertically and/or the emitting and/or the detecting may be performed at different heights. Further additionally or alternatively, the laboratory sample container may be rotated and/or the emitting and/or the detecting may be performed at different angular positions.

According to an embodiment of the invention, the information may be about a position of the material along the laboratory sample container, in particular a level position of the material in form of a laboratory liquid sample contained by the laboratory sample container, and/or a label position of the material in form of a label attached to an, in particular the, outside of the laboratory sample container.

Additionally or alternatively, the information may be about a characterization of the material, in particular in form of a, in particular the, laboratory liquid sample contained by the laboratory sample container, in particular a blood component, in particular an isolated blood component.

Further additionally or alternatively, the information may be about a number of layers of the material in form of a, in particular the, number of labels attached to an, in particular the, outside of the laboratory sample container.

In particular the determining the information may be denoted time of flight based liquid level detecting or detection. Additionally or alternatively, the information may be the, in particular real and/or determined, position or a corresponding, in particular physical, quantity. Further additionally or alternatively, the position may comprise or have a value.

The information may be the, in particular real and/or determined, characterization. Additionally or alternatively, the characterization may comprise or have a content. Further additionally or alternatively, the term "categorization" or "classification" may be used synonymously for the term "characterization".

The label may be used to enable to identify the laboratory sample container or the laboratory sample. Additionally or alternatively, the information may be the, in particular real and/or determined, number of layers. Further additionally or alternatively, the number of layers may comprise or have a value.

According to an embodiment of the invention, step a) may comprise: emitting the measurement beam along an emitting direction nonparallel, in particular orthogonal, to a longitudinal axis and/or a longitudinal wall or surface of the laboratory sample container, and/or non-orthogonal, in particular parallel, to a level of the material in form of a, in particular the, laboratory liquid sample contained by the laboratory sample container, and/or nonparallel, in particular orthogonal, to the material in form of a, in particular the, label attached to an, in particular the, outside of the laboratory sample container.

Additionally or alternatively, step b) may comprise: detecting at least the part of the measurement beam along a detecting direction nonparallel, in particular orthogonal, to a, in particular the, longitudinal axis and/or a, in particular the, longitudinal wall or surface of the laboratory sample container, and/or non-orthogonal, in particular parallel, to a, in particular the, level of the material in form of a, in particular the, laboratory liquid sample contained by the laboratory sample container, and/or nonparallel, in particular orthogonal, to the material in form of a, in particular the, label attached to an, in particular the, outside of the laboratory sample container.

This enables determining the information especially easily and/or especially reliably.

In particular the emitting direction and/or the detecting direction may be nonparallel, in particular, orthogonal to the longitudinal direction. Additionally or alternatively, the longitudinal axis may be non-orthogonal, in particular parallel, to the longitudinal direction. Further additionally or alternatively, the level may be nonparallel, in particular, orthogonal, to the longitudinal direction. Further additionally or alternatively the emitting direction and the detecting direction may be opposite to each other.

According to an embodiment of the invention, step b) may comprise: detecting at least the part of the interacted measurement beam reflected by or from the laboratory sample container. This enables determining much Information about the laboratory sample container and/or the material arranged in or at the sample container.

According to an embodiment of the invention, step b) may comprise: detecting a first part of the measurement beam reflected by a close, proximal and/or first wall or surface of the laboratory sample container, and detecting a second part of the measurement beam reflected by a distant, distal and/or second wall or surface of the laboratory sample container, in particular for and/or the one place and/or the another one place. Step c) may comprise: determining a first indication for a first time of flight of the detected first part of the measurement beam, and determining a second indication for a second time of flight of the detected second part of the measurement beam. Step d) may comprise: determining the information based on the determined first indication for the first time of flight and the determined second indication for the second time of flight. This enables determining the information about the material arranged in the laboratory sample container based on the determined second indication for the second time of flight as an actual indication and the determined first indication for the first time of flight as a reference indication. Additionally or alternatively, this enables determining the information about the material arranged at the laboratory sample container based on the determined first indication for the first time of flight as an actual indication and the determined second indication for the second time of flight as a reference indication. In particular step d) may comprise: determining the information based on a difference of, in particular the determined first indication for, the first time of flight and, in particular the determined second indication for, the second time of flight.

Additionally or alternatively to reflection, transmission may be used for the determining. For example, the detecting may be performed at a part of the measurement beam transmitted through the laboratory sample container. For each detected part, a separate indication may be determined, and it may be used for evaluation as described herein. The original measurement beam may first contact the first surface, and a part transmitted through the first surface may contact the second surface.

According to an embodiment of the invention, the measurement beam may be a pulsed measurement beam, in particular a pulsed laser beam. This enables determining the indication for the time of flight especially easily and/or especially reliably. In particular the emitting device may be denoted laser or laser emitter.

According to an embodiment of the invention, the measurement beam may be a radiation measurement beam, in particular an electromagnetic radiation measurement beam, in particular a light measurement beam, in particular an infrared light measurement beam. This enables interacting of at least the part of the emitted measurement beam with the material especially easily and/or especially reliably. In particular the emitting may be denoted irradiating, in particular illuminating. Additionally or alternatively, the emitting device may comprise or be a laser and/or a light-emitting diode (LED). Further additionally or alternatively, the emitting device may be denoted light emitter or light source. Further additionally or alternatively, the detecting device may be denoted photodetector. Further additionally or alternatively, light may comprise visible light (400-700 nm (nanometer)) and/or ultraviolet light and/or infrared light (700 nm to 1 mm (millimeter)).

According to an embodiment of the invention, step d) may comprise: determining the information based on, that the time of flight is longer in the case of the interaction with the material compared to a case of less or no interaction with a material or the material. In particular a refractive index of the material is typically larger than one and/or a refractive index of air, i.e. one.

According to an embodiment of the invention, step b) may comprise: detecting at least the part of the interacted measurement beam in a case having at least a minimum intensity.

Additionally or alternatively, step c) may comprise: determining the indication for the time of flight of the detected measurement beam in a case having at least a minimum intensity.

This enables determining the information based on an actual signal and/or not on noise.

The time of flight may be the measurement of the time, in particular taken by the measurement beam, to travel a distance through a medium, in particular the material.

In other words: Time of flight may be the total time light will take to travel from the laser emitter to the laboratory sample container and from the laboratory sample container to the photodetector. A schematic diagram of the measurement principle can be derived from the drawings. A setup may consist of at least four main components: the laser, e.g. 980 nm, the laboratory sample container, the photodetector, in particular which may be highly sensitive, and/or optical components like a filter and/or a lens. The laser may emit the light pulse towards the laboratory sample container. When the light pulse hits the first wall of the laboratory sample container, the first portion of the light will reflect back and the second portion will transmit or pass through. The reflected light will be detected with the highly sensitive photodetector (e.g. an avalanche photodiode). The time this light pulse took from the emitter to the laboratory sample container wall to the photodetector will be measured. The light which transmitted through the first wall will hit the second wall. A portion of this light will also be reflected back. This reflected light will also be detected by the same photodetector. The total time it took to reach the photodetector will also be measured.

Different materials have different refractive indices. The speed of light is dependent on the refractive index. Thus, when the laboratory sample container will be scanned, depending on the material in the sample container (e.g. air, serum, gel or blood cruor), the speed of light will be different. Resultantly, the time of flight, in particular from the second wall of the laboratory sample container, will also be different. Based on this measurement time of flight, the, in particular sample, material/s will be characterized.

Similarly, the time of flight of light reflecting from the first wall of the laboratory sample container can be used to determine an orientation, the position, and/or the number of label, in particular barcode, layers. In the presence of the label the time of flight will be more than the absence of the label. During scanning of the laboratory sample container, when the label will start the time of flight will increase until the label ends. Additionally, with each additional label layer the time of flight will increase. This will give the information about the position and the number of label layers at or on the laboratory sample container.

No material may be determined based on if the, in particular first and/or second, indication is in a predetermined first range.

The label at the laboratory sample container may be determined if the, in particular first, indication is in a predetermined second range. In particular the second range may be greater than the first range.

In particular the, in particular vertical, position of the label at the laboratory sample container may be determined based on if the, in particular first, indication is in the predetermined second range.

Additionally or alternatively the orientation of the label at the laboratory sample container may be determined based on if the, in particular first, indication is in the predetermined second range.

Further additionally or alternatively, the specific number of label layers may be determined based on if the, in particular first, indication is in a predetermined number specific range. In particular the number specific range may be greater than the first range.

The, in particular specific and/or sample, material in the laboratory sample container may be determined based on if the, in particular second, indication is in a predetermined sample specific range. In particular the sample specific range may be greater than the first range.

Additionally or alternatively, the level of the material in the laboratory sample container may be determined based on if the, in particular second, indication is in the sample specific range.

According to an embodiment of the invention the laboratory system may comprise a holder and/or a movement device.

The holder may be adapted to hold the laboratory sample container, in particular aligned with respect to the emitting device and/or the detecting device.

The movement device may be adapted to move the emitting device and/or the detecting device and the laboratory sample container relatively to each other.

### BRIEF DESCRIPTION OF THE DRAWINGS

In the following, embodiments of the invention will be described in detail with reference to the drawings. Throughout the drawings, the same elements will be denoted by the same reference numerals.
- Fig. 1: shows a laboratory system and a method for determining an information about at least one material arranged in a laboratory sample container, and
- Fig. 2: shows the laboratory system and the method for determining an information about at least one material arranged at a laboratory sample container.

### DETAILED DESCRIPTION OF EMBODIMENTS OF THE INVENTION

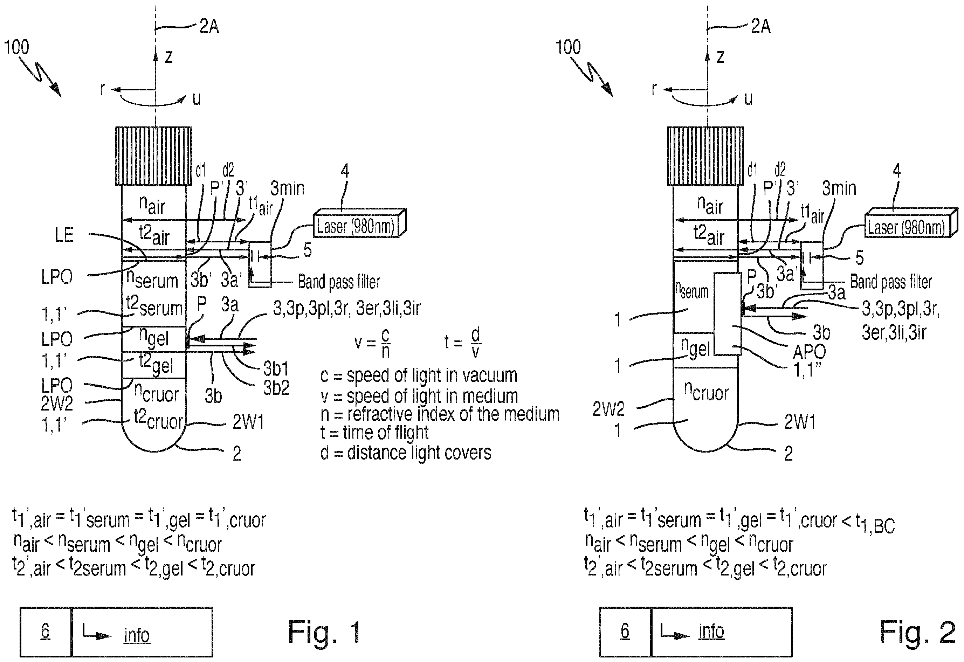

Fig. 1 and 2 show a laboratory system 100 for determining an information info about at least one material 1 arranged in and/or at a laboratory sample container 2. The laboratory system 100 comprises an emitting device 4, wherein the emitting device 4 is configured to emit at least one measurement beam 3 towards the laboratory sample container 2, in particular emits, such that at least a part 3a of the emitted measurement beam 3 interacts with the material 1. Furthermore, the laboratory system 100 comprises a detecting device 5, wherein the detecting device 5 is configured to detect at least a part 3b of the interacted measurement beam 3, in particular detects. Moreover, the laboratory system 100 further comprises a determining device 6, wherein the determining device 6 is configured to determine an indication for a time of flight t1, t2 of the detected measurement beam 3, in particular determines, and to determine the information info based on the determined indication for the time of flight t1 ,t2, in particular determines.

Further, Fig. 1 and 2 show a method for determining the information info about the at least one material 1 arranged in and/or at the laboratory sample container 2. The method comprises the steps:
a) emitting the at least one measurement beam 3 towards the laboratory sample container 2, in particular by the emitting device 4, such that at least the part 3a of the emitted measurement beam 3 interacts with the material 1,
b) detecting at least the part of the interacted measurement beam 3, in particular by the detecting device 5,
c) determining the indication for the time of flight t1, t2 of the detected measurement beam 3, in particular by the determining device 6, and
d) determining the information info based on the determined indication for the time of flight t1, t2, in particular by the determining device 6.

In detail step a) comprises: emitting one measurement beam 3 towards one place P of the laboratory sample container 2, in particular by the emitting device 4, such that at least a part 3a of the emitted one measurement beam 3 interacts with the material 1, and emitting another one measurement beam 3' towards another one place P' of the laboratory sample container 2, in particular by the emitting device 4, such that at least a part 3a' of the emitted another one measurement beam 3' interacts less or does not interact with the material 1. Step b) comprises: detecting at least a part 3b of the interacted measurement beam 3 and detecting at least a part 3b' of the less or not interacted measurement beam 3', in particular by the detecting device 5. Step c) comprises: determining one indication for one time of flight t1, t2 of the detected interacted measurement beam 3 and determining another one indication for another one time of flight t1', t2' of the detected less or not interacted measurement beam 3', in particular by the determining device 6. Step d) comprises: determining the information info based on comparing the determined one indication for the one time of flight t1, t2 and the determined another one indication for the another one time of flight t1', t2' with each other, in particular by the determining device 6.

In detail the one place P and the another one place P' differ in a longitudinal direction z. In alternative embodiments additionally or alternatively the one place and the another one place may differ in a circumferential direction u along the laboratory sample container.

In the shown embodiment step a) comprises: emitting the one measurement beam 3 and emitting the another one measurement beam 3' by the emitting device 4, wherein the emitting device 4 and the laboratory sample container 2 are moved relatively to each other.

Additionally or alternatively step b) comprises: detecting at least the part 3b of the interacted measurement beam 3 and detecting at least the part 3b' of the less or not interacted measurement beam 3' by the detecting device 5, wherein the detecting device 5 and the laboratory sample container 2 are moved relatively to each other.

Furthermore, the information info is about a position PO of the material 1 along the laboratory sample container 2, in Fig. 1 a level position LPO of the material 1 in form of a laboratory liquid sample 1' contained by the laboratory sample container 2, and/or in Fig. 2 a label position APO of the material 1 in form of a label 1" attached to an outside of the laboratory sample container 2.

Additionally or alternatively, the information info is about a characterization of the material 1, in Fig. 1 in form of the laboratory liquid sample 1' contained by the laboratory sample container 2, in particular a, in particular an isolated, blood component.

In the shown embodiment there are three materials 1 contained by the laboratory sample container 2, i.e. blood cruor, gel and serum, in particular along the longitudinal direction z or above each other. The information info is about three positions PO of the materials 1 along the laboratory sample container 2, in particular three level positions LPO of the materials 1, in particular along the longitudinal direction z or above each other.

This enables helping in detecting the wrong centrifugation and/or granulates.

Further additionally or alternatively, the information info is about a number of layers of the material 1 in form of a number of labels 1" attached to the outside of the laboratory sample container 2.

Moreover, step a) comprises: emitting the measurement beam 3 along an emitting direction r nonparallel, in particular orthogonal, to a longitudinal axis 2A and/or a longitudinal wall 2W of the laboratory sample container 2, and/or non-orthogonal, in particular parallel, to a level LE of the material 1 in form of the laboratory liquid sample 1' contained by the laboratory sample container 2, and/or nonparallel, in particular orthogonal, to the material 1 in form of the label 1" attached to the outside of the laboratory sample container 2.

Additionally or alternatively, step b) comprises: detecting at least the part 3b of the measurement beam 3 along a detecting direction -r nonparallel, in particular orthogonal, to the longitudinal axis 2A and/or the longitudinal wall 2W of the laboratory sample container 2, and/or non-orthogonal, in particular parallel, to the level LE of the material 1 in form of the laboratory liquid sample 1' contained by the laboratory sample container 2, and/or nonparallel, in particular orthogonal, to the material in form of the label 1" attached to the outside of the laboratory sample container 2.

Further, step b) comprises: detecting at least the part 3b of the interacted measurement beam 3 reflected the laboratory sample container 2.

In detail step b) comprises: detecting a first part 3b1 of the measurement beam 3b reflected by a close wall 2W1 of the laboratory sample container 2, and detecting a second part 3b2 of the measurement beam 3b reflected by a distant wall 2W2 of the laboratory sample container 2. Step c) comprises: determining a first indication for a first time of flight t1 of the detected first part 3b1 of the measurement beam 3b, and determining a second indication for a second time of flight t2 of the detected second part 3b2 of the measurement beam 3b. Step d) comprises: determining the information info based on the determined first indication for the first time of flight t1 and the determined second indication for the second time of flight t2.

Furthermore, the measurement beam 3 is a pulsed measurement beam 3p, in particular a pulsed laser beam 3pl.

Moreover, the measurement beam is a radiation measurement beam 3r, in particular an electromagnetic radiation measurement beam 3er, in particular a light measurement beam 3li, in particular an infrared light measurement beam 3ir.

Further, step d) comprises: determining the information info based on, that the time of flight t1, t2 is longer in the case of the interaction with the material 1 compared to a case of less or no interaction with the material 1.

Furthermore, step b) comprises: detecting at least the part 3b of the interacted measurement 3 beam in a case having at least a minimum intensity 3min.

Additionally or alternatively, step c) comprises: determining the indication for the time of flight t1, t2 of the detected measurement beam 3 in a case having at least a minimum intensity 3min.

As the shown and above discussed embodiments reveal, the invention provides a laboratory system and a method for determining an information about at least one material arranged in and/or at a laboratory sample container.

## Claims

1. Laboratory system (100) for determining an information (info) about at least one material (1) arranged in and/or at a laboratory sample container (2), wherein the laboratory system (100) comprises:
- an emitting device (4), wherein the emitting device (4) is configured to emit at least one measurement beam (3) towards the laboratory sample container (2), such that at least a part (3a) of the emitted measurement beam (3) interacts with the material (1),
- a detecting device (5), wherein the detecting device (5) is configured to detect at least a part (3b) of the interacted measurement beam (3), and
- a determining device (6), wherein the determining device (6) is configured to determine an indication for a time of flight (t1, t2) of the detected measurement beam (3), and to determine the information (info) based on the determined indication for the time of flight (t1, t2).

2. Method for determining an information (info) about at least one material (1) arranged in and/or at a laboratory sample container (2), in particular performed by a laboratory system (100) according to claim 1, the method comprising the steps:
a) emitting at least one measurement beam (3) towards the laboratory sample container (2), such that at least a part (3a) of the emitted measurement beam (3) interacts with the material (1),
b) detecting at least a part (3b) of the interacted measurement beam (3),
c) determining an indication for a time of flight (t1, t2) of the detected measurement beam (3), and
d) determining the information (info) based on the determined indication for the time of flight (t1, t2).

3. Method according to claim 2,
- wherein step a) comprises: emitting one measurement beam (3) towards one place (P) of the laboratory sample container (2), such that at least a part (3a) of the emitted one measurement beam (3) interacts with the material (1), and emitting another one measurement beam (3') towards another one place (P') of the laboratory sample container (2), such that at least a part (3a') of the emitted another one measurement beam (3') interacts less or does not interact with the material (1),
- wherein step b) comprises: detecting at least a part (3b) of the interacted measurement beam (3) and detecting at least a part (3b') of the less or not interacted measurement beam (3'),
- wherein step c) comprises: determining one indication for one time of flight (t1, t2) of the detected interacted measurement beam (3) and determining another one indication for another one time of flight (t1', t2') of the detected less or not interacted measurement beam (3'), and
- wherein step d) comprises: determining the information (info) based on comparing the determined one indication for the one time of flight (t1, t2) and the determined another one indication for the another one time of flight (t1', t2') with each other.

4. Method according to claim 3,
- wherein the one place (P) and the another one place (P') differ in a longitudinal direction (z) and/or a circumferential direction (u) along the laboratory sample container (2).

5. Method according to claim 4,
- wherein step a) comprises: emitting the one measurement beam (3) and emitting the another one measurement beam (3') by an emitting device (4), wherein the emitting device (4) and the laboratory sample container (2) are moved relatively to each other, and/or
- wherein step b) comprises: detecting at least the part (3b) of the interacted measurement beam (3) and detecting at least the part (3b') of the less or not interacted measurement beam (3') by a detecting device (5), wherein the detecting device (5) and the laboratory sample container (2) are moved relatively to each other.

6. Method according to any one of claims 2 to 5,
- wherein the information (info) is about a position (PO) of the material (1) along the laboratory sample container (2), in particular a level position (LPO) of the material (1) in form of a laboratory liquid sample (1') contained by the laboratory sample container (2), and/or a label position (APO) of the material (1) in form of a label (1") attached to an outside of the laboratory sample container (2),
- wherein the information (info) is about a characterization of the material (1), in particular in form of a laboratory liquid sample (1') contained by the laboratory sample container (2), in particular a, in particular an isolated, blood component, and/or
- wherein the information (info) is about a number of layers of the material (1) in form of a number of labels (1") attached to an outside of the laboratory sample container (2).

7. Method according to any one of claims 2 to 6,
- wherein step a) comprises: emitting the measurement beam (3) along an emitting direction (r) nonparallel, in particular orthogonal, to a longitudinal axis (2A) and/or a longitudinal wall (2W) of the laboratory sample container (2), and/or nonorthogonal, in particular parallel, to a level (LE) of the material (1) in form of a laboratory liquid sample (1') contained by the laboratory sample container (2), and/or nonparallel, in particular orthogonal, to the material (1) in form of a label (1") attached to an outside of the laboratory sample container (2), and/or
- wherein step b) comprises: detecting at least the part (3b) of the measurement beam (3) along a detecting direction (-r) nonparallel, in particular orthogonal, to a longitudinal axis (2A) and/or a longitudinal wall (2W) of the laboratory sample container (2), and/or nonorthogonal, in particular parallel, to a level (LE) of the material (1) in form of a laboratory liquid sample (1') contained by the laboratory sample container (2), and/or nonparallel, in particular orthogonal, to the material (1) in form of a label (1") attached to an outside of the laboratory sample container (2).

8. Method according to any one of claims 2 to 7,
- wherein step b) comprises: detecting at least the part (3b) of the interacted measurement beam (3) reflected by the laboratory sample container (2).

9. Method according to claim 8,
- wherein step b) comprises: detecting a first part (3b1) of the measurement beam (3b) reflected by a close wall (2W1) of the laboratory sample container (2), and detecting a second part (3b2) of the measurement beam (3b) reflected by a distant wall (2W2) of the laboratory sample container (2),
- wherein step c) comprises: determining a first indication for a first time of flight (t1) of the detected first part (3b1) of the measurement beam (3b), and determining a second indication for a second time of flight (t2) of the detected second part (3b2) of the measurement beam (3b), and
- wherein step d) comprises: determining the information (info) based on the determined first indication for the first time of flight (t1) and the determined second indication for the second time of flight (t2).

10. Method according to any one of claims 2 to 9,
- wherein the measurement beam (3) is a pulsed measurement beam (3p), in particular a pulsed laser beam (3pl).

11. Method according to any one of claims 2 to 10,
- wherein the measurement beam (3) is a radiation measurement beam (3r), in particular an electromagnetic radiation measurement beam (3er), in particular a light measurement beam (3li), in particular an infrared light measurement beam (3ir).

12. Method according to any one of claims 2 to 11,
- wherein step d) comprises: determining the information (info) based on, that the time of flight (t1, t2) is longer in the case of the interaction with the material (1) compared to a case of less or no interaction with the material (1).

13. Method according to one of claims 2 to 12,
- wherein step b) comprises: detecting at least the part (3b) of the interacted measurement beam (3) in a case having at least a minimum intensity (3min), and/or
- wherein step c) comprises: determining the indication for the time of flight (t1, t2) of the detected measurement beam (3) in a case having at least a minimum intensity (3min).
